(19) Europäisches Patentamt
European Patent Office
Office européen des brevets

(11) **EP 2 537 709 B1**

(12) **EUROPEAN PATENT SPECIFICATION**

(45) Date of publication and mention
of the grant of the patent:
**07.03.2018 Bulletin 2018/10**

(51) Int Cl.:
***B60Q 1/08*** *(2006.01)*          ***B60Q 1/14*** *(2006.01)*
***G06K 9/00*** *(2006.01)*          ***G06K 9/20*** *(2006.01)*

(21) Application number: **12170334.2**

(22) Date of filing: **31.05.2012**

(54) **Image processing apparatus and light distribution control method**

Bildverarbeitungsvorrichtung und Lichtverteilungssteuerverfahren

Appareil de traitement d'image et procédé de contrôle de distribution d'éclairage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2011 JP 2011124549**

(43) Date of publication of application:
**26.12.2012 Bulletin 2012/52**

(73) Proprietor: **Koito Manufacturing Co., Ltd.
Tokyo 108-8711 (JP)**

(72) Inventor: **Kobayashi, Shoji
Shizuoka-shi, Shizuoka (JP)**

(74) Representative: **Gill Jennings & Every LLP
The Broadgate Tower
20 Primrose Street
London EC2A 2ES (GB)**

(56) References cited:
**EP-A1- 2 127 944          US-A1- 2009 009 089
US-A1- 2010 321 496          US-A1- 2011 109 743
US-B1- 6 677 986**

**Description**

FIELD

One or more embodiments of the present invention relate to an image processing apparatus for use in an automobile or the like.

BACKGROUND

In order to prevent a traffic accident between a vehicle and a pedestrian, it is important for a driver of the vehicle to be able to accurately perceive the presence of the pedestrian. To that end, it is considered to control the light distribution of a vehicular lamp to provide an environment in which a pedestrian is easily perceived. For example, JP-A-2010-52602 discloses a technology of controlling the light distribution of a headlamp unit provided in a vehicle such that a visual object luminance is included in a range of a recognition limit luminance if the luminance of a visual object range (i.e., the visual object luminance), which changes according to a vehicular driving environment, is less than the range of the recognition limit luminance.

Meanwhile, a visibility of a pedestrian to a driver largely changes according to a luminance-contrast between a background luminance and the luminance of a visual object (pedestrian). In addition, the luminance of the environment largely changes especially at night. Thus, the visibility of the pedestrian to the driver may suddenly change.

US 2011-0109743 discloses a method and an arrangement for evaluating sensor images of an image-evaluating surroundings-detection system on a moved carrier, preferably a vehicle, are proposed, wherein areas in the sensor images captured by a camera which are dark in relation to the surroundings are evaluated in chronologically successive evaluation steps in order to determine whether said dark areas are moving toward the carrier at the speed of said carrier, and in that these dark areas are detected as shadows of a static object and corresponding signaling is performed.

US 6,677,986 B1 discloses a method for determining the lighting conditions in front of a moving object, in particular in front of a motor vehicle. The arrangement includes a sensor unit which scans the area in front of the vehicle in the direction of vehicle travel as well as an evaluation unit which measures both the general lighting conditions and the lighting conditions in front of the vehicle in the direction of vehicle travel based on the values supplied by the sensor unit. The brightness measurement is carried out with a two-dimensional image sensor, and one or more information values relating to the lighting conditions, for example before entering a tunnel, is generated with the help of a sectoral and/or global evaluation of the brightness values measured by the image sensor in the respective sectors used on a traffic lane between the edges of the traffic lane.

SUMMARY

In view of the above, one or more embodiments of the invention provide a technology of improving the visibility of a pedestrian or the like to a driver in a vehicular driving environment whose luminance changes.

According to one aspect of the invention, there is provided an image processing apparatus as set out in claim 1.

According to another aspect of the invention, there is provided an image processing method as set out in claim 4.

According to the embodiments, the visibility of a pedestrian or the like to a driver can be improved even in a vehicular driving environment whose luminance changes.

BRIEF DESCRIPTION OF THE DRAWINGS

A general configuration that implements the various features of the invention will be described with reference to the drawings. The drawings and the associated descriptions are provided to illustrate embodiments of the invention and should not limit the scope of the invention.

FIG. 1 is a graph illustrating the relationship between a background luminance and a luminance contrast Cth at a visibility limit.

FIG. 2 is a graph illustrating the relationship between the luminance (i.e., luminosity per unit area of a light source) of a subject and each image density serving as image output data of a camera.

FIG. 3A is a view schematically illustrating a manner in which a pedestrian wearing gray clothes (top and bottom clothes differ from each other in reflection rate) is seen in a dark lighting environment whose luminance is 1 candela (cd)/square meters ($m^2$).

FIG. 3B is a view schematically illustrating a manner in which a pedestrian similar to that shown in FIG. 3A is seen in a bright lighting environment whose luminance is 5 cd/$m^2$.

FIGS. 3C and 3D are views each schematically illustrating a manner in which a pedestrian similar to that shown in FIG. 3A is seen in an uneven lighting environment whose luminance is 5 cd/m$^2$.

FIG. 4 is a view illustrating the field of front vision of a vehicle driver at a vehicle speed of 60 kilometers per hour (km/h) corresponding to a thinking distance TD of about 17 meters (m).

FIG. 5 is a view schematically illustrating an example of dividing the field of front vision of a vehicle driver.

FIG. 6 is a graph illustrating an example of setting a target value of a visibility level VL at a vehicle speed of 60 km/h and that of change of the visibility level VL in an actual traffic visual environment.

FIG. 7A is a schematic view illustrating an example of a low-beam light distribution pattern for the swinging-control of a cutoff line.

FIG. 7B is a schematic view illustrating an example of a low-beam light distribution pattern for the up-and-down-control of the cutoff line.

FIG. 7C is a schematic view illustrating an example of a low-beam light distribution pattern for the up-and-down/side-to-side movement control of a superimposed spot light-beam.

FIG. 7D is a schematic view illustrating an example of a low-beam light distribution pattern for the up-and-down/side-to-side movement control of plural superimposed spot light-beams.

FIG. 8 is a schematic view illustrating the external-appearance of a vehicle to which a vehicular headlamp device according to an embodiment of the invention is applied.

FIG. 9 is a block view illustrating the outline configuration of a vehicular headlamp device according to an embodiment of the invention.

FIG. 10 is a flowchart illustrating a light distribution control method according to an embodiment of the invention, which includes object attribute determination processing.

## DETAILED DESCRIPTION OF THE EMBODIMENTS

First, details about how the present inventor accomplished the invention are described hereinafter. The visibility of a pedestrian largely changes according to a luminance contrast between background and a visual object (pedestrian). For example, if the background of a pedestrian is bright (e.g., a background luminance is about 2 cd/m$^2$ to about 10 cd/m$^2$), the pedestrian can be checked surely and visually, regardless of the color (e.g., black) and the reflectivity of the cloth of the pedestrian. On the other hand, if the background of a pedestrian is dark (e.g., the background luminance is equal to or less than 1 cd/m$^2$), the visibility of the pedestrian is low even though the color of the cloth of the pedestrian is white.

A cause of a pedestrian traffic accident is said according to a result of investigation thereof to be a perception error occurring between a pedestrian and a driver. That is, a cause of a night traffic accident is considered to be a situation in which a pedestrian is invisible to a driver while the pedestrian thinks that he is seen by the driver. Thus, in a movement space in which many pedestrians are present and in which a visual environment abruptly changes, the risk of a pedestrian's encounter with an accident is considered to be increased. It is desired from the viewpoint of risk-management engineering that a situation is prevented from abruptly being changed so as to increase the risk.

Accordingly, it is necessary to suppress such risk of a pedestrian's encounter with an accident. To that end, it is necessary that a method for measuring, with an optical camera, change of the risk of the visual environment relating to safe driving is established, and that appropriate light control which meets therewith is performed. Hereinafter, the definition of the risk, the method for measuring the visual environment with an optical camera, light-distribution control which meets therewith, and the like including matters studied to accomplish the invention are described.

(Definition of Risk)

The risk is determined, based on how many seconds later a visual object is present in a space to which a vehicle reaches (i.e., a preview time), and whether the visual object is seen (i.e., visibility thereof). If the visual object is present at a long distance from the vehicle, the risk is reduced. If the visual object is present at a position at which it is difficult for the visual object to avoid an accident, the risk is increased. If the visual object is invisible, the risk is high. If the visual object is visible, the risk is low. Thus, a method can be cited, which determines the risk in terms of a ratio of the visibility level VL of the visual object (e.g., an obstacle or a pedestrian) to the preview time.

(Definition of Visibility Level VL)

The visibility level VL is defined by the following expression (1).

$$VL = C/Cth \ \ldots\ldots\ (1)$$

In this expression, "C" designates a luminance contrast, and "Cth" denotes a limit luminance contrast at a visibility limit. The luminance contrast C is defined by the following expression (2).

$$C = (L - Lb)/Lb \quad \text{......} \quad (2)$$

where "L" designates the luminance of a visual object, and "Lb" denotes the background luminance. "Cth" denotes a limit luminance contrast at a visibility limit.

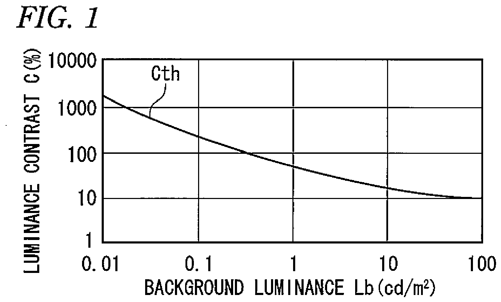

The visibility limit is a limit at which the visual object can be seen (i.e., a visibility rate is 50%) . FIG. 1 is a graph illustrating the relationship between the background luminance and the luminance contrast Cth at the visibility limit. The visibility contrast Cth at such a visibility limit is obtained by Blackwell et al. Data shown in FIG. 1 represents the luminance contrast Cth under a uniform background luminance condition. That is, the data Cth can be considered as that obtained at an adaptation luminance.

A night adaptation luminance depends upon a driving environment and ranges from 0.5 cd/m$^2$ (in the case of using a dark low-beam), through 1 cd/m$^2$ (in the case of using a low-beam), to 2 cd/m$^2$ (in the case of using bright road lighting) . If the adaptation luminance is 1 cd/m$^2$, and the background luminance Lb = 1 cd/m$^2$, it is seen from FIG. 1 that the limit luminance contrast Cth $\approx$ 0.6. If the luminance contrast C is the limit luminance contrast Cth, it is found according to the expression (2) that the luminance L of a visual object = 1.6 cd/m$^2$, and that $\Delta$Lmin = L - Lb = 0.6 cd/m$^2$.

That is, under conditions that the adaptation luminance is 1 cd/m$^2$, and that the background luminance is 1 cd/m$^2$, a visibility limit luminance is 1.6 cd/m$^2$ corresponding to a positive luminance contrast Cth $\approx$ 0.6. Even if the visual object is darker than the background, the limit luminance of the visual object can be calculated from the limit luminance contrast Cth. Thus, L = 0.4 cd/m$^2$.

The above example corresponds to a case where VL = 1, that is, C = Cth (i.e., the luminance contrast corresponds to the visibility limit at which the visual object is visible) . For example, a state of the visual object corresponding to VL =0 is defined as a state in which the visual object is not visible at all. A state of the visual object corresponding to VL = 5 (C = 5 $\times$ Cth) is defined as a state in which the visual object is ordinarily visible. A state of the visual object corresponding to VL = 25 is defined as a state in which the visual object is highly visible.

(Method for Measuring Visual Environment with Camera)

According to the present embodiment, a visibility rate VR (or visibility level VL) and a preview-time risk PR are obtained from image data output by a camera. Then, a safe visual environment at a predetermined position is estimated therefrom. In addition, total risk R is determined based thereon. Hereinafter, an image measuring method is described before such a determination method is described.

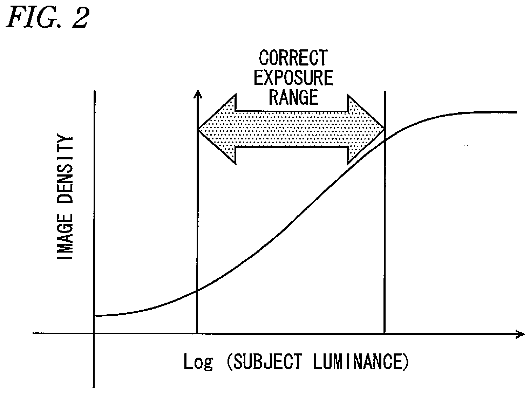

FIG. 2 is a graph illustrating the relationship between the luminance (i.e., the luminosity per unit area of a light source) of a subject and each image density serving as image output data of a camera. If the distribution of the luminance of a subject is within a correct exposure range, the luminance of an object is appropriately obtained. Thus, a clear luminance-distribution image is obtained. On the other hand, if the distribution of the luminance of a subject is outside the correct exposure range (i.e., the subject is too bright or too dark, the luminance of an object is not appropriately obtained. Thus, an unclear image is obtained. Incidentally, the luminance at a predetermined position on a screen is obtained from the density-luminance characteristic (i.e., a gamma characteristic as shown in Fig. 2) of a light receiving element determined under exposing conditions (i.e., the area of an aperture, and an exposure time (aperture time)) thereat.

(Method for Estimating Luminance Contrast C and Method for Estimating Visibility Level VL)

Ordinarily, a driver can recognize a visual object as a pedestrian if the luminance contrast between the luminance of the visual object and the background luminance is high even when visually recognizing only a part (e.g., a below-knee part or a head) of the pedestrian. Generally, the density distribution or the luminance distribution of a predetermined range can be measured using a vehicular camera serving as a moving body. However, in the case of using a moving camera, it is difficult to recognize not only the recognition of a pedestrian but that of a part of the pedestrian. This is because of the facts that the movement (i.e., optical flow) of the camera should be taken into consideration, that the distribution of the background luminance at night is complex, and that it is difficult to distinguish from the background a pedestrian wearing clothes made of various coloring materials having diverse reflectivities.

Thus, if the presence of a pedestrian cannot be identify in a predetermined range, or if it is considered that the presence of the pedestrian cannot be identify in the predetermined range, there is no choice but to estimate the visibility level VL from the luminance distribution or the density distribution of the predetermined range in a case where a pedestrian is assumed to be present therein. Hereinafter, a method for estimating the visibility level VL is described.

Generally, a pedestrian wears a combination of clothes having various reflectivities and diverse colors. No matter what reflectivities and colors the pedestrian's clothes have, the higher the background luminance, the easier the visual recognition of the pedestrian (i.e., the higher the visibility level VL) . If the background luminance is constant, the higher the reflectivity of the clothes, the easier the visual recognition of the pedestrian (i.e., the higher the visibility level VL).

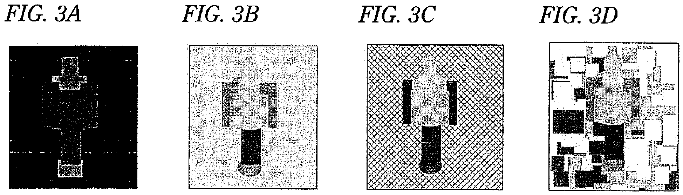

FIG. 3A is a view schematically illustrating a manner in which a pedestrian wearing gray clothes (top and bottom clothes differ from each other in reflection rate) is seen in a dark lighting environment whose luminance is 1 cd/m$^2$. FIG. 3B is a view schematically illustrating a manner in which a pedestrian similar to that shown in FIG. 3A is seen in a bright lighting environment whose luminance is 5 cd/m$^2$. FIGS. 3C and 3D are views each schematically illustrating a manner in which a pedestrian similar to that shown in FIG. 3A is seen in an uneven lighting environment.

If the lighting environment is so bright that the background luminance Lb > 5 cd/m$^2$, as illustrated in FIG. 3B, a pedestrian is highly visible (incidentally, the corresponding visibility level VL = 25). On the other hand, if the lighting environment is so dark that the background luminance Lb = 1 cd/m$^2$ or so, as illustrated in FIG. 3A, the background luminance has a limit value at which a pedestrian is visible (incidentally, the corresponding visibility level VL = 1). If the background luminance Lb < 0.2 cd/m$^2$, a pedestrian is almost invisible (incidentally, the corresponding visibility range VR = 0).

On the other hand, in an actual environment, the distribution of the background luminance is uneven, as illustrated in FIGS. 3C and 3D. In such a case, the visibility of a pedestrian is slightly less than that of a pedestrian in the background whose luminance is even, because the outline of the pedestrian is difficult to recognize. However, sometimes, a part of the pedestrian is highly visible. Thus, the visibility of a pedestrian in such a case is comparable to that of a pedestrian in the background whose luminance is uniform.

Accordingly, the visibility level VL of a pedestrian in a predetermined area-range can be estimated if the average luminance (image density) of the area-range can be estimated. It is advisable to calculate the average luminance (or average density) within the correct exposure range of an image sensor. Incidentally, sometimes, in the predetermined area-range, there is an illuminating light source or a glare source, whose luminance is outside the exposure range. On the other hand, sometimes, a dark visual object is present therein. If the average value of the luminance (or image density) of the area-range is obtained according to the density-luminance characteristic of the light receiving element in such cases, the average value is inaccurate. In such cases, it is appropriate to determine the average value of the luminance (or density) as the maximum or minimum luminance (or density) of the correct exposure range or the maximum or minimum luminance (or density) obtained by illuminating the area-range with the headlamps.

(Influence of Preview Time)

A distance in a forward direction of a vehicle to a visual object therefrom is defined as a preview distance PD. In addition, a preview time PT is defined as a time taken by the vehicle to reach the visual object by assuming that the vehicle frontwardly travels at a current vehicle speed to the visual object by the preview distance PD. As described above, if the visual object is present at a long distance from the vehicle, the risk is low. If the visual object is present at a position corresponding to a distance from a vehicle, at which avoidance of an accident is difficult. Thus, the risk is high.

A stopping distance SD of a vehicle is expressed by the following expression (3) as a sum of a thinking distance TD and a braking distance.

```
The stopping distance SD = the thinking distance
```

$$(V \cdot t / 3.6) + \text{the braking distance } \{(V/3.6)^2/(2g \cdot f)\} \dots (3)$$

where "V" designates a vehicle speed [km/h], "t" denotes a driver's recognition reaction time = 0.5 to 1.0 [s], "f" designates a friction coefficient of a road surface (e.g., 0.53 at a vehicle speed of 60 km/h while the road surface is dried), and "g" denotes an acceleration of gravity (i.e., 9.8 m/s$^2$).

If the recognition reaction time is 1.0 s and the vehicle speed is 60 km/h in the expression (3), the thinking distance TD is about 17 m, and the braking distance is about 27 m. The stopping distance is about 44 m. Accordingly, if a visual object present at a distance from the vehicle, which is longer than 44 m (incidentally, the corresponding preview time PT ≈ 2.6 s), is visually recognized, the vehicle can travel almost safely (stop). Therefore, it is necessary to visually recognize a visual object located at a distance from the vehicle, which is longer than a distance corresponding to the preview time.

If a visual object located more distance from a position where the vehicle reaches 1.0 s later (i.e., the preview time PT = 1.0 s), a danger can be avoided by steering a wheel. It is more important to visually recognize a position corresponding to a preview time of 1.0 s. On the other hand, even if a driver visually recognizes a visual object which is at a distance (e.g., a location corresponding to a preview time of 0.5 s in the frontward direction of the vehicle) shorter than the distance from the vehicle to the position where the vehicles reaches 1.0 s later, neither the stopping of the vehicle nor the avoidance of an accident can practically be performed. Therefore, it is unnecessary to irradiate such an area with light. Hence, the position itself, at which a visual object is present (thus, the preview time itself), is engaged with the risk.

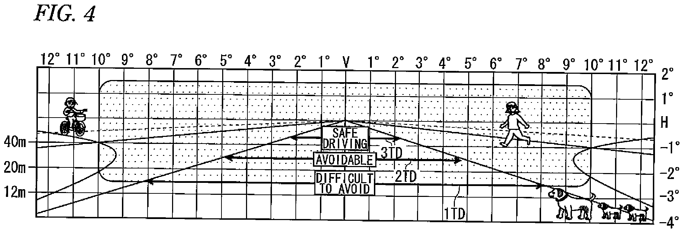

FIG. 4 is a view illustrating the field of front vision of a driver at a vehicle speed of 60 km/h (incidentally, the corresponding thinking distance TD ≈ 17 m). If the preview distance PD < 1 TD (i.e., a thinking distance corresponding to 1 s), i.e., if the visual object is located in an area whose ordinate is lower than an angular-ordinate of -2°, as viewed in this figure, it is difficult to avoid an accident. Thus, even if the visual object is illuminated, there is little effect. A region which is located more forwardly than the area and corresponds to the preview distance PD > 1 TD is important. However, the worth of illuminating both side parts of this region, which have the rightward and leftward angular-abscissas are larger than 10°, is reduced. Accordingly, in the case of a vehicle speed of 60 km/h, a visibility range which is most important for safe driving is such that each of the rightward and leftward angular-abscissas of the visibility range is equal to or less than 10°, and that the absolute value of each of the angular-ordinates of the visibility range is equal to or less than 2°. However, even in a case where a visual object is in this range, if the distance D of the visual object from the vehicle is larger than 100 m, the risk of imparting safe driving is reduced. The worth of illuminating such a visual object is low.

Thus, in the light distribution control to be described below, it is advisable to change the necessary visibility level VL according to the position (corresponding to the preview time) of the visual object. For example, the visibility level VL can be set such that the visibility level VL at a position close to the limit (corresponding to the preview time PT ≈ 1.0 s) is set to be highest, and that the visibility level VL at each of positions located in front of and short of the limit is set to be low.

Next, the visibility level VL required corresponding to the preview time PT of a visual object is shown in Table 1, as an example of the definition of the risk (i.e., the preview-time risk) PR at the preview time PT of the visual object.

[Table 1]

| Preview Time PT (sec) | 0.5 | 1.0 | 1.5 | 2.0 | 2.5 | 3.0 | 4.0 | 5.0 | 6.0 | 7.0 |
|---|---|---|---|---|---|---|---|---|---|---|
| Required Visibility Level VL | 10 | 10 | 10 | 10 | 10 | 10 | 4 | 1 | 1 | 1 |

According to a table shown in Table 1, the risk PR is defined such that the visibility level VL = 10 in the range of the position of the visual object, in which the position of the visual object ranges to the position where the vehicle reaches 3 s later (i.e., the position corresponding to the PT = 3.0 s) . Thus, stable visibility is required. As the position of the visual object becomes more distant therefrom so that the preview time PT corresponding to the position of the visual object increases so as to be larger than 3.0 s, the required visibility level VL is reduced in stages. That is, the VL is reduced from 5 (corresponding to a stage in which the visual object is visible) to 1 (corresponding to the visibility limit).

(Example of Dividing Field of Vision)

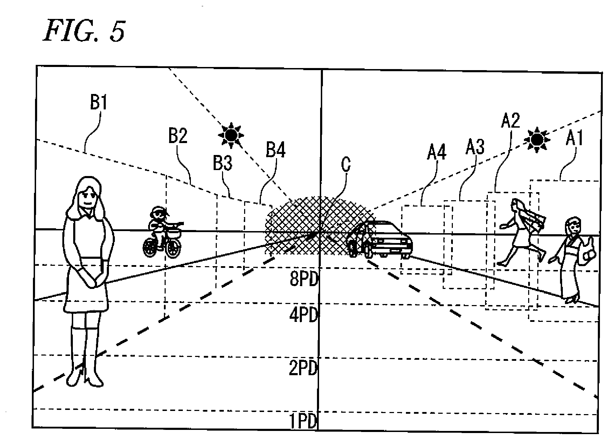

Next, an example of dividing the field of vision in front of a vehicle, which is preferred for estimating, from image data acquired with a camera, a position, at which a visual object is present, is described hereinafter. FIG. 5 is a schematic view illustrating an example of dividing the field of front vision of a vehicle driver.

More specifically, as illustrated in a right-side part of FIG. 5, a captured image of the field of front vision of a vehicle driver, which is acquired with a camera, is divided into plural square blocks A1 to A4 respectively defined according to the distances from a vehicle to front corresponding areas. Alternatively, as illustrated in a left-side part of FIG. 5, the captured image can be divided into trapezoidal blocks B1 to B4. Incidentally, as illustrated in FIG. 5, each of a side strip and a road shoulder included in the captured image is divided into plural blocks.

Any of blocks are determined such that the blocks are gradually reduced in size towards a vanishing point C. In addition, the up-down-direction range of each block is determined so as to include the entire image of a pedestrian if the pedestrian is assumed to be present on a side strip and a road shoulder. Consequently, the visibility level VL is obtained by image analysis in a case where a pedestrian is present in the range of a block.

The division of the captured image in the traveling direction of the vehicle is performed using plural blocks in consideration of the preview time PT. Practical division is performed using blocks whose associated preview time PT ranging from 0.5 to 1. 1, blocks whose associated preview time PT ranging from 0.9 to 1.5, blocks whose associated preview time PT ranging from 1.4 to 2.1, blocks whose associated preview time PT ranging from 1.8 to 2.6, blocks whose associated preview time PT ranging from 2.4 to 3.7, blocks whose associated preview time PT ranging from 3.3 to 4.8, and blocks whose associated preview time PT ranging from 4.5 to 6.5 by taking each preview time PT and the size of the field of measuring-vision into consideration. The divided areas (or the blocks obtained by division) can be set so as to overlap with each other.

(Example of Evaluation of Risk of Imparting Safe Driving Based on Visibility Level VL)

It is required from the viewpoint of risk management that the risk of imparting safe driving is constant in a vehicular movement space. Thus, it is preferable that the visibility levels VL determining the risk don't abruptly change (the value of VL = 0 corresponds to a state in which a visual object is invisible, the value of VL = 1 corresponds to a state in which a visual object is visible, the value of VL = 5 corresponds to a state in which a visual object is ordinarily visible, and the value of VL = 25 corresponds to a state in which a visual object is clearly visible), and that the value of each visibility level VL is maintained to be equal to or larger than a predetermined value.

However, it is difficult for the headlamps serving as moving illumination lamps to assure illumination performance at a distant place. Especially, the securement of the illumination performance at a distant place is difficult for a headlamp forming a low-beam light distribution pattern in which a cutoff line (i.e., a boundary line between a bright part and a dark part) is present in the vicinity of a horizontal line. On the other hand, the degree of engagement of an object, which is present in front of a vehicle, with a traffic accident is lowered with increase of the distance thereof from the vehicle. Accordingly, the visibility level VL of a distant object can be set to be low.

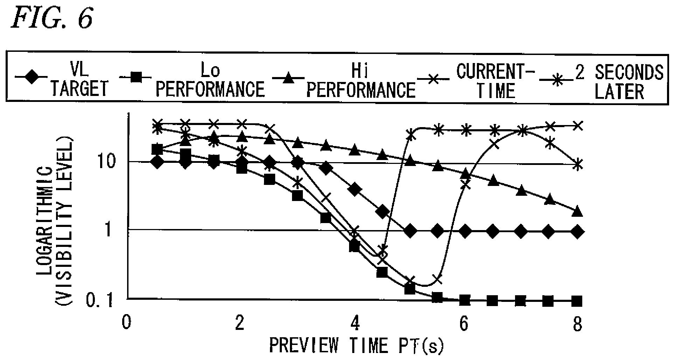

FIG. 6 is a graph illustrating an example of setting a target value of the visibility level VL at a vehicle speed of 60 km/h and that of change of the visibility level VL in an actual traffic visual environment. The abscissa axis of a graph illustrated in FIG. 6 represents a forward distance to an object range normalized by the preview time PT. The ordinate axis of the graph illustrated in FIG. 6 represents the logarithmically expressed visibility level VL.

FIG. 6 describes the visibility level VL corresponding to each preview time, which is obtained by irradiating a low-beam (corresponding to the curve "Lo PERFORMANCE"), the visibility level VL corresponding to each preview time, which is obtained by irradiating a high-beam (corresponding to the curve "Hi PERFORMANCE"), and examples of chronological change of the visibility level VL in a visual environment in which light-dark change due to the store lighting in a city area is present (corresponding to the curves "CURRENT TIME" and "2 SECONDS LATER"), in addition to the example of setting the target value of the visibility level VL (corresponding to the curve "VL TARGET"). Incidentally, the values of the visibility level VL corresponding to each preview time, which is obtained by irradiating a low-beam, and the visibility level VL corresponding to each preview time, which is obtained by irradiating a high-beam, are obtained in a situation in which neither buildings nor light sources are present on the periphery of a road.

According to the present embodiment, the target value of the visibility level VL is set at 10 (VL = 10) higher than the value (VL = 5), at which a visual object is ordinarily visible, until the preview time PT reaches 3 (corresponding to three seconds (s) later) . The value of the VL is gradually reduced towards a position more distant than a point whose distance corresponds to the preview time PT = 3 (s) from the vehicle. In a range of the distance therefrom equal to or larger than that corresponding to the preview time PT = 5, the VL is set at 1 (VL =1) corresponding to the limit of a position at which a visual object is visible. This is because the required degree of the visibility of an object present at a distant position can be low.

On the other hand, the visibility level VL (hereinafter referred to as a low-beam visibility level VL) due to the irradiation of a low-beam corresponding to each preview time can assure a value exceeding the target value of the VL in a range in which the preview time PT < 2. However, the visibility level VL can assure a value lower than the target value of the VL in a range in which the preview time PT > 2. Actually, the value of the low-beam visibility level VL corresponding to the limit of a forward position at a distance of 70 m (PT ≈ 4) is lower than a value of 1 (i.e., the visibility level VL = 1) corresponding to the limit of a position at which a visual object is visible.

Incidentally, the visibility level VL due to the irradiation of a high-beam corresponding to each preview time can always exceed the target value of the VL at a vehicle speed of 60 km/h, because the luminosity at the center of a high-beam light distribution pattern is sufficiently high.

The visual environment simulating the city area of the commercial zone is an example adapted such that an environment luminance is abruptly lowered at a preview time PT equal to or later than 3 seconds, and becomes lower than the target value of the VL and has a lowest value at a preview time PT close to 5 seconds, and is increased at a preview time PT later than 5 seconds according to the curve "CURRENT TIME" as illustrated in FIG. 6. In a case where the vehicle drives while irradiating a part located in a forward direction of the vehicle with a low-beam, it is necessary to control the light distribution of the low-beam so as to increase the environment luminance of such a part.

Then, the visibility level VL is slightly improved 2 seconds later by being affected by low-beam irradiation light. However, a position at which the value of the visibility level VL is lower than the target value of the VL, and a position at which the visibility level VL has the lowest value (i.e., PT ≈ 4.5) become closer to a near side of the vehicle. The light distribution of the headlamp is controlled by forecasting such chronological change of the visibility level (or risk change) VL. Consequently, illumination can be achieved according to temporal change of the visibility (or the risk) .

If the visibility level VL of the visual environment is high due to the illumination of the road and that of the store, an amount of illumination light of the headlamps, which is irradiated in the direction of the road shoulder and the side strip at a position immediately close to the vehicle, e.g., a position corresponding to the preview time PT < 1, can be reduced. Sometimes, a road shoulder on a narrow lane becomes too bright. Thus, a driver feels botheration (e.g., the visibility level VL > 50) . In such a case, a light amount of side irradiation of a low-beam can be controlled to be lowered so that an appropriate visibility level VL is obtained.

If the vehicle speed is low, abrupt change of the luminance (or the visibility level VL) of the visual environment is difficult to occur. Thus, the light distribution control for suppressing change of the visibility level VL can be performed in a case where the vehicle speed is equal to or higher than a predetermined value of 40 km/h. At the side of an on-coming lane, an amount of light of a basic light distribution cannot be increased to take countermeasures against glare. Thus, the target value of the VL can be changed according to which of an own traffic lane and an on-coming lane is irradiated with light.

(Light Distribution Control)

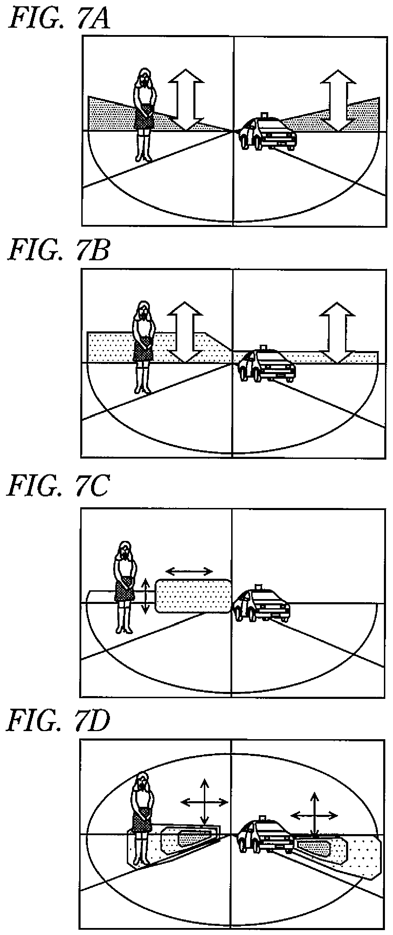

Next, the control of the light distribution of the headlamps, which implements a light distribution adapted so that the visibility level VL has a value equal to or larger than a predetermined value in a low region in which the visibility level VL is low, is described hereinafter. FIG. 7A is a schematic view illustrating an example of a low-beam light distribution pattern for the swinging-control of a cutoff line. FIG. 7B is a schematic view illustrating an example of a low-beam light distribution pattern for the up-and-down-control of the cutoff line. FIG. 7C is a schematic view illustrating an example of a low-beam light distribution pattern for the up-and-down/side-to-side movement control of a superimposed spot light-beam. FIG. 7D is a schematic view illustrating an example of a low-beam light distribution pattern for the up-and-down/side-to-side movement control of plural superimposed spot light-beams.

In the case of implementing the cutoff line control illustrated in FIGS. 7A and 7B by controlling, e.g., the shade of each headlamp of the projector type, which is divided into left-side and right-side parts, at the on-coming vehicle side and the leading-vehicle side independent of each other. A method of the up-and-down parallel-displacement of the cutoff line (see FIG. 7B) and the control of the cutoff line by swinging the cutoff line like a sector with respect to a vanishing point (see FIG. 7A) can be considered as a method of controlling the cutoff line.

The spot light distribution displacement control method illustrated in FIG. 7C is a control method of forming a spot light distribution pattern using, e.g., headlamps of the projector type, and then irradiating an area, whose visibility level VL is lower than the target value, with the light distribution pattern.

According to the spot light distribution combination control method illustrated in FIG. 7D, a unit for forming a trapezoidal spot light distribution with a headlamp of the projector type is attached to each of the left-side and right-side headlamps. Then, an area whose visibility level VL is lower than a target value is irradiated with the light distribution pattern. If there is no on-coming vehicle, a high-beam can be formed by the combination of the left-side and right-side headlamps.

The headlamp configured according to the present embodiment can be a headlamp of the type other than the headlamp of the above projector type. Preferably, the headlamp according to the present embodiment is that of the type adapted so that a part or the entire of the light distribution pattern can be turned on/off. The light distribution control can be implemented by controlling not only the light distribution pattern but the amount of irradiation light from lamps or light emitting diodes (LEDs).

Hereinafter, a best mode for carrying out the invention is described in detail with reference to the drawings. Incidentally, in the following description of the drawings, like reference numeral designates like components. Thus, redundant description of such components is accordingly omitted.

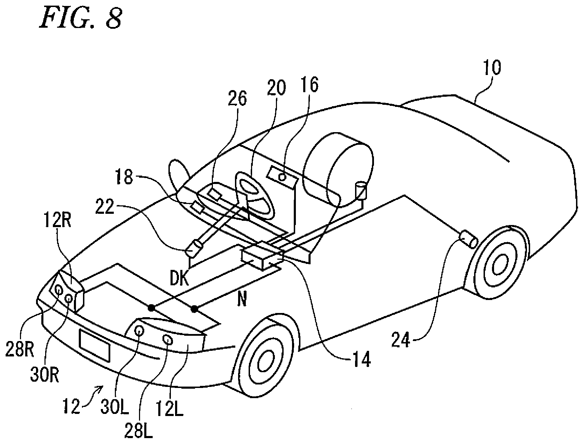

FIG. 8 is a schematic view illustrating the external-appearance of a vehicle to which a vehicular headlamp device according to an embodiment of the invention is applied. As illustrated in FIG. 8, a vehicle 10 according to the present embodiment includes a headlamp device 12, a control system 14 serving as a headlamp control apparatus for controlling irradiation of light by the headlamp device 12, various sensors configured to detect information representing the driving conditions of the vehicle 10 and output a detection signal to the control system 14, a forward view monitoring camera 16 configured to monitor a forward view of the vehicle 10, and an antenna 18 configured to receive an orbit signal and an inter-vehicle communication signal from a global positioning system (GPS) satellite and to output the signals to the control system 14.

For example, a steering sensor 22 for detecting a steering angle of a steering wheel 20, a vehicle speed sensor 24 for detecting a vehicle speed of the vehicle 10, and an illuminance sensor 26 for detecting an illuminance around an own vehicle are provided as the various sensors. The sensors 22, 24, and 26 are connected to the above control system 14.

A headlamp device to which the invention is applicable is not limited to a specific one. As long as a light distribution can be controlled such that the visibility level of a previewed irradiation area is equal to or higher than a predetermined value, any headlamp device can be employed. For example, a halogen lamp, a gas discharge headlamp, and a headlamp using LEDs can be employed. In the present embodiment, a headlamp of the multiple lamp type configured (with plural LEDs) so that the light distribution of a high-beam area in front of the vehicle can be changed is described hereinafter by way of example. However, a headlamp of the type capable of swiveling the lamp, and the above headlamp of the projector type capable of implementing the cutoff line control, the spot light distribution displacement control, and the spot light distribution combination control can be employed.

The headlamp device 12 includes a pair of right-side and left-side headlamp units 12R and 12L. The headlamp units 12R and 12L have the same configuration except that the internal structures of the headlamp units 12R and 12L are by laterally symmetric. A low-beam lamp unit 28R and a high-beam lamp unit 30R are disposed in a right-side lamp housing. A low-beam lamp unit 28L and a high-beam lamp unit 30L are disposed in a left-side lamp housing.

The control system 14 controls the headlamp device 12 capable of controlling the headlamp units 12R and 12L each of which is equipped in an associated one of right-side and left-side parts of a front portion of the vehicle and adapted to be able to change the light distribution of a low-beam area and a high-beam area, i.e., controlling the turning-on/off of each of plural LEDs to be able to change the light distribution characteristic thereof, based on outputs of various sensors. According to such a type of an adaptive driving beam (ADB) system, the visibility of forward areas of the vehicle can be improved without giving glare to a forward vehicle in accordance with attributes of objects (e.g., a leading-vehicle, an on-coming vehicle, and a road lighting unit), which are present in a forward direction of the vehicle. Consequently, the control system 14 is effective in enhancing running-safety.

(Vehicular Headlamp Device)

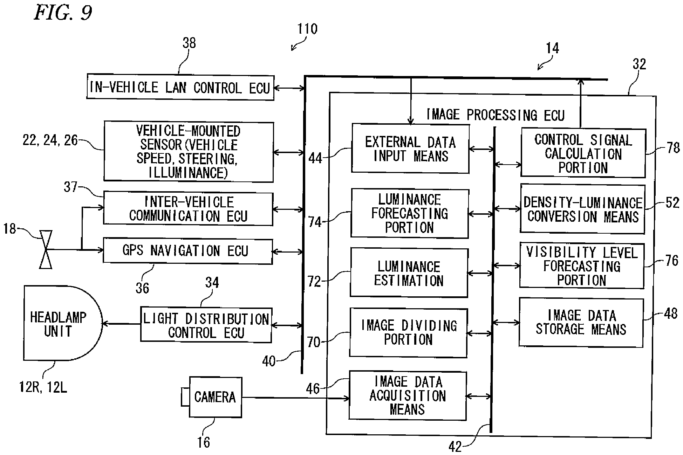

Next, a vehicular headlamp device according to the present embodiment is described hereinafter. FIG. 9 is a block view illustrating the outline configuration of a vehicular headlamp device 110 according to the present embodiment of the invention. The vehicular headlamp device 110 includes headlamp units 12R and 12L, and a control system 14 which controls the irradiation of light by the headlamp units 12R and 12L. The vehicular headlamp device 110 is such that the control system 14 can acquire a captured image of a view ahead of a vehicle, divide the acquired image into plural blocks defined according to distances to forward areas from the vehicle, estimate a luminance (or visibility level VL) of atmosphere of each of the areas respectively corresponding to the plural blocks, and forecast change of the luminance (or the visibility level VL) of atmosphere in an irradiation region that can be irradiated with light from the headlamp unit, based on the estimated luminance of the atmosphere of each of the plural blocks differing from one another in distance from the vehicle. The vehicular headlamp device 110 determines a light distribution control condition, based on the forecasted change of the luminance or the visibility level VL of the atmosphere, and controls the irradiation of light by the headlamp units 12R and 12L, based on the determined light distribution control condition.

Thus, a forward view monitoring camera 16 for acquiring a captured image of a vehicle forward view including a visual object of a driver is connected to the control system 14 according to the present embodiment. In addition, a steering sensor 22, a vehicle speed sensor 24, and an illuminance sensor 26, which are used for detecting steering information and a vehicle speed to be referred to when the driving conditions of the vehicle are determined, are connected thereto. For example, an illuminance sensor configured such that a light receiving surface is provided to extend vertically to be capable of measuring the vertical illuminance (or an amount of glare due to an artificial light source) of light received from an on-coming vehicle and the artificial light source (e.g., a road lighting unit and a store lighting unit), and another illuminance sensor configured such that a light receiving surface is provided to extend horizontally to be capable of measuring the horizontal illuminance of light received from a driving environment and from above a vehicle are used as the illumination intensity sensor 26.

(Control System)

As illustrated in FIG. 9, the control system 14 includes an image processing electronic control unit (ECU) 32, a light distribution control ECU 34, a GPS navigation ECU 36, an inter-vehicle communication ECU 37, and an in-vehicle local area network (LAN) control ECU 38. Various ECUs and diverse vehicle-mounted sensors are connected to one another by an in-vehicle LAN bus 40, so that the transmission/reception of data thereamong can be performed.

The image processing ECU 32 serving as an image processing unit includes an image dividing portion 70 for acquiring a captured image of a view ahead of the vehicle, and for dividing the acquired image into plural blocks defined according to the distances of forward areas from the vehicle, a luminance estimation portion 72 for estimating the luminance (or visibility level VL) of atmosphere of each of the areas respectively corresponding to the plural blocks, and a luminance forecasting portion 74 for forecasting change of the luminance of atmosphere in an irradiation region that can be irradiated with light from the headlamp unit, based on the estimated luminance of the atmosphere of each of the plural blocks differing from one another in distance from the vehicle. Incidentally, the image processing ECU 32 can include a visibility level forecasting portion 76 forecasting change of the visibility level in an irradiation region that can be irradiated with light from the headlamp unit, based on the estimated luminance of the atmosphere of each of the plural blocks differing from one another in distance from the vehicle, instead of or in addition to the luminance forecasting portion 74.

The image processing ECU 32 further includes a control signal calculation portion 78 for preliminarily calculating a control signal which controls the light distribution of the headlamp unit so that the forecasted change of atmosphere in the irradiation area is alleviated or that the forecasted visibility level in the irradiation area is equal to or higher than a predetermined value. Consequently, the visibility can be suppressed from being lowered due to abrupt change of the luminance of atmosphere or of the visibility level.

In the image processing ECU 32, component-portions are connected to one another by a high-speed bus 42. The light distribution control ECU 34 determines, based on information supplied from the image processing ECU 32 and the various vehicle-mounted sensors, light distribution control conditions suited to the driving environment in which the vehicle is placed. In addition, the light distribution control ECU 34 outputs control signals representing the determined conditions to the headlamp units 12R and 12L.

The headlamp units 12R and 12L are such that the light distribution is controlled by inputting the control signals output from the light distribution control ECU 34 to a drive unit for optical components and to a lighting control circuit for a light source thereof. The forward view monitoring camera 16 is a monocular camera with image sensors such as a charge coupled device (CCD) image sensor or a complementary metal-oxide semiconductor (CMOS) image sensor. The forward view monitoring camera 16 acquires, from image data, road linear-information, and information concerning the existence and the locations of road attached-facilities, on-coming vehicles and leading-vehicles from image data, if necessary, in cooperation with other sensors, such as a radar sensor. If the camera is of the zoom lens type, when the vehicle speed is high, e.g., equal to or higher than 40 km/h, the field of imaging vision can be changed according to the magnification of a zoom lens by causing the zoom lens to operate.

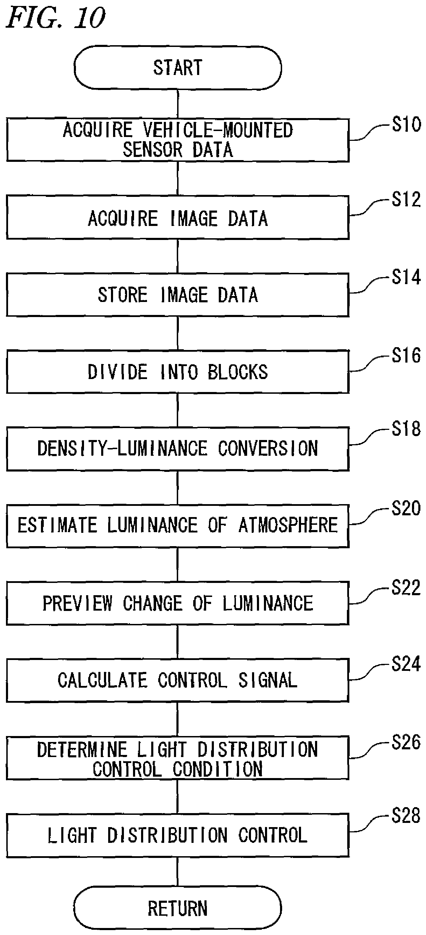

FIG. 10 is a flowchart illustrating a light distribution control method according to the present embodiment of the invention, which includes object attribute determination processing. The forecasting of the change of the visibility level VL is performed mainly by the image processing ECU 32 illustrated in FIG. 9. The light distribution control is performed mainly by the light distribution control ECU 34.

In step S10, when processing is started at predetermined timing, an external data input means 44 acquires, through the in-vehicle LAN bus 40, data output from the various vehicle-mounted sensors (i.e., the steering sensor 22, the vehicle speed sensor 24, and the illuminance sensor 26), the GPS navigation ECU 36, the inter-vehicle communication ECU 37, and the like. In step S12, an image data acquisition means 46 acquires image data representing an image of a forward view ahead of the vehicle, which is captured by the forward view monitoring camera 16. Incidentally, the image data output from the forward view monitoring camera 16 can be adapted to correspond to either a monochromatic image or a color image.

In step S14, the acquired image data is temporarily stored by a storage means such as a random access memory (RAM) in an image data storage means 48. In step S16, the image dividing portion 70 divides the captured image of the forward view of the vehicle into plural blocks defined according to the distances to forward areas from the vehicle, based on the acquired image data.

Incidentally, the image dividing portion 70 can divide the captured image into plural blocks such that the larger the distance from the vehicle to the area (i.e., the larger the preview time PT), the narrower the horizontal width of the block corresponding to the area, as illustrated in FIG. 5. In addition, the image dividing portion 70 can divide into plural blocks each of a side strip and a road shoulder included in the captured image. In the case of assuming that a pedestrian is present on a side strip or a road shoulder, the image dividing portion 70 can divide a captured image into plural blocks such that the block includes the entire image of the pedestrian. Consequently, the visibility level of areas such as the side strip and the road shoulder, in which a pedestrian is likely to be present, and in which the recognition thereof is important in a traffic visual environment at night, can be estimated.

In addition, the image dividing portion 70 can be configured to calculate, based on image information representing a captured image, a vanishing point and to divide the captured image into plural blocks. Consequently, the captured image can simply be divided into plural blocks each of which is defined according to the distance from the vehicle to the corresponding area. In addition, light distribution control adapted to give no glare to an on-coming vehicle can be implemented by employing a region (or block) including a road vanishing point as a glare zone to detect an on-coming vehicle.

Next, in step S18, density data representing an image is converted into luminance data (or data representing luminosity per unit area of a light source) in a density-luminance conversion means 52. The conversion of image data to luminance data can be implemented in consideration of exposing conditions (or capturing conditions) by preliminarily obtaining the relationship between the image density and the luminance of each forward range of the vehicle under the exposing conditions (see FIG. 2) .

Next, in step S20, the luminance estimation portion 72 estimates, based on image information (i.e., an average luminance or an average density) of plural blocks, the luminance (i.e., the average luminance and the background luminance) of atmosphere and a visual object of each of the areas respectively corresponding to the blocks. In addition, the luminance estimation portion 72 estimates the visibility level VL, based on the background luminance and the luminance of the visual object.

Next, in step S22, the luminance forecasting portion 74 forecasts, based on the estimated luminance of atmosphere in each of plural areas, change of the luminance of the atmosphere in an irradiation area that can be irradiated with light of the headlamp unit.

Next, in step S24, the control signal calculation portion 78 preliminarily calculates a control signal for controlling the light distribution of the headlamp unit so that the forecasted change of atmosphere in the irradiation area is alleviated or that the forecasted visibility level in the irradiation area is equal to or higher than a predetermined value.

Then, in step S26, the calculated control signal is input to the light distribution control ECU 34 through the in-vehicle LAN bus 40. The light distribution control conditions are determined, based on other information such as the driving condition of the own vehicle, and a weather condition. Then, the light distribution control ECU 34 controls light distribution by outputting a control signal to a light source or a driving source provided in the headlamp units 12R and 12L based on the determined light distribution condition (S28).

Thus, the vehicle headlamp device 110 calculates a vanishing point from the acquired captured-image of the forward view of the vehicle. Then, the vehicle headlamp device 110 extracts from the captured image the block defined according to the distance from the vehicle to the forward area. The vehicular headlamp device 110 estimates the luminance of the atmosphere of the area corresponding to the block, based on the image information of the block. The vehicle headlamp device 110 can control the light distribution of the headlamp unit according to the estimated luminance of the atmosphere of the area forecasted to be included next in the irradiation region that can be irradiated with light of the headlamp unit. Consequently, the light distribution of the headlamp unit is controlled according to the estimated change of the luminance of the atmosphere. Thus, the visibility of a pedestrian to a driver can be improved in the driving environment of the vehicle, in which the luminance changes.

Incidentally, depending upon the road shape (up-and-down/left-and-right changing curves, the number of lanes, and the position of an own traffic lane in a road), it is necessary to correct the position of the block corresponding to the preview time. In that case, the position of the block is changed according to an instruction from a block position changing means (not shown). Incidentally, the device can be configured such that if the vehicle speed is equal to or higher than a predetermined value, the position or the shape of each block is set to be constant.

In accordance with the control system 14 serving as the headlamp control device according to the present embodiment, and with the vehicular headlamp device 110 having the control system 14, the light distribution control can be implemented by forecasting change of the luminance (or the visibility level), especially, in the traffic visual environment (the lighting condition and the state of the on-coming vehicle) at night so as to alleviate change of the luminance (or the visibility level). Thus, the invention can alleviate the abrupt change of the visibility during night-time driving. Accordingly, the invention can contribute safe driving at night.

**Claims**

1.   An image processing apparatus (32) comprising:

an image dividing portion (70) configured to divide an image acquired by capturing a view ahead of a vehicle into a plurality of blocks defined according to distances of a plurality of forward areas from the vehicle, wherein an up-down-direction range of each block is determined so as to include an entire image of a pedestrian if the pedestrian is assumed to be present on a side strip and a road shoulder;
a luminance estimation portion (72) configured to, based on image information of the plurality of blocks, estimate a luminance of atmosphere of each of the plurality of forward areas respectively corresponding to the plurality of blocks; and:
a luminance forecasting portion (74) configured to forecast change of a luminance of atmosphere in an irradiation region capable of being irradiated with light from a headlamp unit, based on the estimated luminance of atmosphere of each of the plurality of forward areas differing from one another in distance from the vehicle; or
a visibility-level forecasting portion (76) configured to forecast change of a visibility level in an irradiation region capable of being irradiated with light from a headlamp unit, based on the estimated luminance of atmosphere of each of the plurality of forward areas differing from one another in distance from the vehicle.

2.   The image processing apparatus (32) according to claim 1 when the apparatus comprises a luminance forecasting portion, the apparatus further comprising:

a control signal calculation portion (78) configured to preliminarily calculate a control signal for controlling a light distribution of the headlamp unit so as to alleviate the forecasted change of atmosphere in the irradiation region.

3.   The image processing apparatus (32) according to claim 1 when the apparatus comprises a visibility-level forecasting portion, the apparatus further comprising:

a control signal calculation portion (78) configured to preliminarily calculate a control signal for controlling a light distribution of the headlamp unit so that the forecasted visibility level in the irradiation region has a value equal to or higher than a predetermined value.

4. An image processing method comprising:

dividing an image acquired by capturing a view ahead of a vehicle into a plurality of blocks defined according to distances of a plurality of forward areas from the vehicle, wherein an up-down-direction range of each block is determined so as to include an entire image of a pedestrian if the pedestrian is assumed to be present on a side strip and a road shoulder;
estimating based on image information of the plurality of blocks, a luminance of atmosphere of each of the plurality of forward areas respectively corresponding to the plurality of blocks; and
forecasting a change of a luminance of atmosphere in an irradiation region capable of being irradiated with light from a headlamp unit, based on the estimated luminance of atmosphere of each of the plurality of forward areas differing from one another in distance from the vehicle; or
forecasting a change of a visibility level in an irradiation region capable of being irradiated with light from a headlamp unit, based on the estimated luminance of atmosphere of each of the plurality of forward areas differing from one another in distance from the vehicle.

## Patentansprüche

1. Bildverarbeitungsvorrichtung (32), umfassend:

einen Bildteilungsabschnitt (70), gestaltet zur Teilung eines durch Aufnehmen einer Sicht vor einem Fahrzeug erfassten Bildes in eine Vielzahl von Blöcken, die nach Abständen einer Vielzahl von Vorwärtsbereichen von dem Fahrzeug definiert sind, wobei ein Aufwärts-Abwärts-Richtungsbereich jedes Blocks festgelegt wird, so dass ein vollständiges Bild eines Fußgängers einbezogen ist, wenn angenommen wird, dass der Fußgänger auf einem Seitenstreifen und einem Straßenrand anwesend ist;
einen Flächenhelligkeitsabschätzungsabschnitt (72), der gestaltet ist, basierend auf Bildinformationen der Vielzahl von Blöcken, eine Flächenhelligkeit der Umgebung jedes der Vielzahl von Vorwärtsbereichen, die jeweils der Vielzahl von Blöcken entsprechen, abzuschätzen; und
einen Flächenhelligkeitsvorhersageabschnitt (74), der gestaltet ist, eine Änderung der Flächenhelligkeit der Umgebung in einem Bestrahlungsbereich, der mit Licht von einer Scheinwerfereinheit bestrahlt werden kann, basierend auf der abgeschätzten Flächenhelligkeit der Umgebung jedes der Vielzahl von Vorwärtsbereichen, die im Abstand von dem Fahrzeug voneinander abweichen, vorherzusagen; oder
einen Sichtweitenniveau-Vorhersageabschnitt (76), der gestaltet ist, eine Änderung des Sichtweitenniveaus in einem Bestrahlungsbereich, der mit Licht von einer Scheinwerfereinheit bestrahlt werden kann, basierend auf der abgeschätzten Flächenhelligkeit der Umgebung jedes der Vielzahl von Vorwärtsbereichen, die im Abstand von dem Fahrzeug voneinander abweichen, vorherzusagen.

2. Bildverarbeitungsvorrichtung (32) nach Anspruch 1, wobei die Vorrichtung einen Flächenhelligkeitsvorhersageabschnitt aufweist und die Vorrichtung des Weiteren umfasst:

ein Steuersignal-Berechnungsabschnitt (78), der gestaltet ist zum vorläufigen Berechnen eines Steuersignals zur Steuerung einer Lichtverteilung der Scheinwerfereinheit, um die vorhergesagte Umgebungsänderung in dem Bestrahlungsbereich abzuschwächen.

3. Bildverarbeitungsvorrichtung (32) nach Anspruch 1, wobei die Vorrichtung einen Sichtweitenniveauvorhersageabschnitt umfasst und die Vorrichtung des Weiteren umfasst:

einen Steuersignalberechnungsabschnitt (78), gestaltet zum vorläufigen Berechnen eines Steuersignals zur Steuerung einer Lichtverteilung der Scheinwerfereinheit, so dass das vorhergesagte Sichtweitenniveau in dem Bestrahlungsbereich einen Wert aufweist, der gleich oder höher ist als ein vorgegebener Wert.

4. Bildverarbeitungsverfahren, umfassend:

Teilen eines durch Aufnehmen einer Sicht vor einem Fahrzeug erhaltenen Bildes in eine Vielzahl von Blöcken, die Abständen einer Vielzahl von Vorwärtsbereichen von dem Fahrzeug entsprechend definiert sind, wobei ein Aufwärts-Abwärts-Richtungsbereich jedes Blocks festgelegt wird, so dass ein Gesamtbild eines Fußgängers einbezogen ist, wenn angenommen wird, dass der Fußgänger auf einem Seitenstreifen und einem Straßenrand anwesend ist;

Abschätzen, basierend auf Bildinformationen der Vielzahl von Blöcken, der Beleuchtung einer Umgebung jedes der Vielzahl von Vorwärtsbereichen, die jeweils der Vielzahl von Blöcken entsprechen; und

Vorhersagen einer Änderung der Umgebungsbeleuchtung in einem Bestrahlungsbereich, der mit Licht von einer Scheinwerfereinheit bestrahlt werden kann, basierend auf der abgeschätzten Umgebungsbeleuchtung jedes der Vielzahl von Vorwärtsbereichen, die im Abstand von dem Fahrzeug voneinander abweichen; oder

Vorhersagen einer Änderung des Sichtweitenniveaus in einem Bestrahlungsbereich, der mit Licht von einer Scheinwerfereinheit bestrahlt werden kann, basierend auf der abgeschätzten Umgebungsbeleuchtung jedes der Vielzahl von Vorwärtsbereichen, die im Abstand von dem Fahrzeug voneinander abweichen.

**Revendications**

1. Appareil de traitement d'image (32) comprenant :

   une partie de division d'image (70) configurée pour diviser une image acquise en capturant une vue en avant d'un véhicule en une pluralité de blocs définis selon les distances d'une pluralité de zones situées devant le véhicule, dans lequel une plage de direction haut/bas de chaque bloc est déterminée de façon à inclure une image entière d'un piéton si le piéton est supposé être présent sur une bande latérale et un accotement ;
   une partie d'estimation de luminance (72) configurée pour, sur la base d'informations d'image de la pluralité de blocs, estimer une luminance d'atmosphère de chacune de la pluralité de zones situées en avant correspondant respectivement à la pluralité de blocs ; et :

   une partie de prévision de luminance (74) configurée pour prévoir un changement de luminance d'atmosphère dans une zone d'irradiation capable d'être irradiée avec la lumière qui provient d'une unité de phare, sur la base de la luminance d'atmosphère estimée de chacune de la pluralité de zones situées en avant et différant les unes des autres en termes de distance par rapport au véhicule ; ou
   une partie de prévision de niveau de visibilité (76) configurée pour prévoir un changement de niveau de visibilité dans une zone d'irradiation capable d'être irradiée avec la lumière qui provient d'une unité de phare, sur la base de la luminance d'atmosphère estimée de chacune de la pluralité de zones situées en avant et différant les unes des autres en termes de distance par rapport au véhicule.

2. Appareil de traitement d'image (32) selon la revendication 1 lorsque l'appareil comprend une partie de prévision de luminance, l'appareil comprenant en outre :

   une partie de calcul de signal de commande (78) configurée pour calculer préalablement un signal de commande destiné à contrôler une répartition de lumière de l'unité de phare de façon à atténuer le changement d'atmosphère prévu dans la zone d'irradiation.

3. Appareil de traitement d'image (32) selon la revendication 1 lorsque l'appareil comprend une partie de prévision de niveau de visibilité, l'appareil comprenant en outre :

   une partie de calcul de signal de commande (78) configurée pour calculer préalablement un signal de commande destiné à contrôler une répartition de lumière de l'unité de phare de sorte que le niveau de visibilité prévu dans la zone d'irradiation présente une valeur égale ou supérieure à une valeur prédéterminée.

4. Procédé de traitement d'image comprenant :

   la division d'une image acquise en capturant une vue en avant d'un véhicule en une pluralité de blocs définis selon les distances d'une pluralité de zones situées devant le véhicule, dans lequel une plage de direction haut/bas de chaque bloc est déterminée de façon à inclure une image entière d'un piéton si le piéton est supposé être présent sur une bande latérale et un accotement ;
   l'estimation, sur la base d'informations d'image de la pluralité de blocs, d'une luminance d'atmosphère de chacune de la pluralité de zones situées en avant correspondant respectivement à la pluralité de blocs ; et

**EP 2 537 709 B1**

la prévision d'un changement de luminance d'atmosphère dans une zone d'irradiation capable d'être irradiée avec la lumière qui provient d'une unité de phare, sur la base de la luminance d'atmosphère estimée de chacune de la pluralité de zones situées en avant et différant les unes des autres en termes de distance par rapport au véhicule ; ou

la prévision d'un changement de niveau de visibilité dans une zone d'irradiation capable d'être irradiée avec la lumière qui provient d'une unité de phare, sur la base de la luminance d'atmosphère estimée de chacune de la pluralité de zones situées en avant et différant les unes des autres en termes de distance par rapport au véhicule.

*FIG. 1*

FIG. 2

*FIG. 3A*     *FIG. 3B*     *FIG. 3C*     *FIG. 3D*

FIG. 4

*FIG. 5*

*FIG. 6*

FIG. 7A

FIG. 7B

FIG. 7C

FIG. 7D

## FIG. 8

## FIG. 9

## FIG. 10

```
              ┌─────────────────┐
              │      START       │
              └─────────────────┘
                       │
        ┌──────────────────────────────┐
        │  ACQUIRE VEHICLE-MOUNTED       │──S10
        │         SENSOR DATA            │
        └──────────────────────────────┘
                       │
        ┌──────────────────────────────┐
        │      ACQUIRE IMAGE DATA        │──S12
        └──────────────────────────────┘
                       │
        ┌──────────────────────────────┐
        │       STORE IMAGE DATA         │──S14
        └──────────────────────────────┘
                       │
        ┌──────────────────────────────┐
        │        DIVIDE INTO BLOCKS      │──S16
        └──────────────────────────────┘
                       │
        ┌──────────────────────────────┐
        │   DENSITY-LUMINANCE CONVERSION │──S18
        └──────────────────────────────┘
                       │
        ┌──────────────────────────────┐
        │  ESTIMATE LUMINANCE OF ATMOSPHERE │──S20
        └──────────────────────────────┘
                       │
        ┌──────────────────────────────┐
        │   PREVIEW CHANGE OF LUMINANCE  │──S22
        └──────────────────────────────┘
                       │
        ┌──────────────────────────────┐
        │     CALCULATE CONTROL SIGNAL   │──S24
        └──────────────────────────────┘
                       │
        ┌──────────────────────────────┐
        │  DETERMINE LIGHT DISTRIBUTION  │──S26
        │       CONTROL CONDITION        │
        └──────────────────────────────┘
                       │
        ┌──────────────────────────────┐
        │    LIGHT DISTRIBUTION CONTROL  │──S28
        └──────────────────────────────┘
                       │
              ┌─────────────────┐
              │      RETURN       │
              └─────────────────┘
```

## REFERENCES CITED IN THE DESCRIPTION

**Patent documents cited in the description**

- JP 2010052602 A
- US 20110109743 A

- US 6677986 B1